## Europäisches Patentamt
## European Patent Office
## Office européen des brevets

(19)

(11) Veröffentlichungsnummer : **0 127 608**
**B1**

(12) **EUROPÄISCHE PATENTSCHRIFT**

(45) Veröffentlichungstag der Patentschrift : **13.04.88**

(21) Anmeldenummer : **84890092.4**

(22) Anmeldetag : **23.05.84**

(51) Int. Cl.⁴ : **A 22 C 9/00**, B 65 G 65/23

(54) Anlage zum Massieren von Fleisch.

(30) Priorität : **27.05.83 AT 1957/83**

(43) Veröffentlichungstag der Anmeldung :
**05.12.84 Patentblatt 84/49**

(45) Bekanntmachung des Hinweises auf die Patenterteilung : **13.04.88 Patentblatt 88/15**

(84) Benannte Vertragsstaaten :
**CH DE FR GB LI SE**

(56) Entgegenhaltungen :
EP-A- 0 041 744
FR-A- 1 122 659
FR-A- 2 204 357
FR-A- 2 249 005
GB-A- 1 392 288
US-A- 3 220 584

(73) Patentinhaber : **Inject Star Pökelmaschinen Gesellschaft m.b.H.**
**Innstrasse 23-25**
**A-1200 Wien (AT)**

(72) Erfinder : **Prosenbauer, Otto**
**Innstrasse 23**
**A-1201 Wien (AT)**

(74) Vertreter : **Boeckmann, Peter, Dipl.Ing. et al**
**Strohgasse 10**
**A-1030 Wien (AT)**

Jouve, 18, rue St-Denis, 75001 Paris, France

EP 0 127 608 B1

**Beschreibung**

Die Erfindung bezieht sich auf eine Anlage zum Massieren von Fleisch, mit einem Gestell mit einer Auflage für den vom Gestell trennbaren Behälter für das zu massierende Fleisch, in die der an seinem einen Stirnende mit einem Boden mit einem Fahrgestell und an seinem anderen Stirnende mit einer Füllöffnung versehene, rotationssymmetrische Behälter in stehender Lage einfahrbar und mittels der um eine horizontale, normal zur Behälterachse liegende Kippachse kippbaren Auflage in eine liegende Stellung verschwenkbar ist, wobei die Auflage mit Tragrollen für den Behälter versehen ist, von deren Wellen zumindest eine zwecks Rotation des Behälters in seiner liegenden Stellung um seine Achse antreibbar ist, und wobei für die Kippung der Auflage ein Kippantrieb im oder am Gestell vorgesehen ist.

Derartige Anlagen sind aus der österreichischen Patentschrift 339 166 bekannt. Sie ermöglichen es, daß das zu behandelnde Fleisch nicht nur während des Massiervorganges, sondern auch während der Beschickung der Anlage und während des Abtransportes von dieser Anlage stets in demselben Behälter verbleibt, wobei die Anlage die Behandlung mehrerer Behälter nacheinander erlaubt, so daß der Behälter auch für andere Zwecke, insbesondere zum Transport des Fleisches zu anderen Behandlungsanlagen, z. B. Pökelautomaten usw., verwendet werden kann. Der einzige Nachteil der bekannten Anlage besteht darin, daß es nach Beendigung des Massiervorganges nicht rasch und einfach möglich ist, das Fleisch aus dem Behälter zu entleeren. Zur Entleerung des Behälters muß vielmehr der Behälter in die stehende Lage zurückgekippt und aus dem Gestell der Vorrichtung wieder ausgefahren werden oder es muß der Behälter mittels eines Kranes von der Auflage abgehoben und zwecks Entleerung an seinem Boden angehoben werden. Insbesondere der letztere Arbeitsvorgang ist nicht einfach durchzuführen, erfordert ein erhebliches Zusatzgerät und ist infolge des zumeist hohen Gewichtes der mit dem Fleisch gefüllten Behälters nicht problemlos durchführbar.

Aus der GB-A-1 392 288 ist es für eine Mischmaschine zur Benutzung bei der Gerbung von Häuten bekannt, einen aus Tragrollen einer Auflage drehbar gelagerten, von dieser Auflage jedoch nicht trennbaren Behälter aus einer horizontalen Bearbeitungslage in eine geneigte Entleerstellung zu kippen, in der die Füllöffnung des Behälters unten liegt.

Die Erfindung setzt sich zur Aufgabe, eine Anlage der eingangs geschilderten Art so zu verbessern, daß jeder Behälter in der Anlage selbst rasch und einfach entleert werden kann, wobei eine einfache Konstruktion erzielt werden soll und die Energie, welche für die Behälterkippung nötig ist, möglichst gering gehalten werden soll. Die Erfindung löst diese Aufgabe dadurch, daß der auf den Tragrollen liegende Behälter mittels der Auflage aus der liegenden Stellung um eine weitere, zur genannten Kippachse parallele Kippachse weiter in eine geneigte Entleerstellung kippbar ist, in der die Füllöffnung unten liegt. Der Behälter bleibt also auf der Auflage während des Entleerungsvorganges ruhen, so daß gesonderte Hebe- oder Abstützorgane für den Behälter bei seiner Entleerung entbehrlich sind. Vor allem aber benötigt die Weiterkippung der Auflage aus der dem Massiervorgang zugeordneten liegenden, vorzugsweise etwa horizontalen, Lage in die Entleerstellung eine wesentliche Ersparnis an Zeit und auch an Energie, da ja der Schwerpunkt des Behälters gegenüber seiner Massierlage nicht so hoch angehoben werden muß wie dies bisher mittels des Kranes erforderlich war. Die Entleerung des Behälters mit der erfindungsgemäßen Anlage ist daher wesentlich rascher und einfacher durchzuführen als mit der bekannten Anlage, wozu noch kommt, daß für die Bedienung der erfindungsgemäßen Anlage keine geschulten Kräfte erforderlich sind. Die Weiterschwenkung der Auflage (im Sinne der Schwenkbewegung in die Massierstellung) in die Entleerstellung des Behälters um eine weitere, zur genannten Kippachse parallele Kippachse hat zur Folge, daß die gesamte Kippung des Behälters aus seiner Einfahrstellung in die Entleerstellung nacheinander um zwei voneinander getrennte Kippachsen erfolgt. Dies bringt den Vorteil einer Vereinfachung der Konstruktion und einer Einsparnis an Energie durch Herabsetzung der Strecke, um die der Gesamtschwerpunkt des Behälters gehoben werden muß, insbesondere dann, wenn der Behälter nur zwecks Massierung des Fleisches gedreht, nicht aber in der Anlage entleert werden soll. Würde dieselbe Kippachse auch für die Entleerung des Behälters verwendet werden, so würde die Füllöffnung des Behälters bei der Entleerung sehr tief zu liegen kommen, so daß die Einleerung des Füllgutes aus dem Behälter, etwa in einen Transportwagen, auf Schwierigkeiten stoßen würde. Außerdem wäre dann die Anordnung des Kippantriebes problematisch. Besondere Vorteile in dieser Richtung treten bei einer bevorzugten Variante der Erfindung auf, bei welcher die zur Erreichung der Entleerstellung wirksame Kippachse höher liegt als die andere Kippachse. Besondere Vorteile ergeben sich im Rahmen der Erfindung durch Verwendung desselben Kippantriebes für die Erreichung der Massierstellung und der Entleerstellung, da dadurch eine Einsparnis an apparativem Aufwand erzielt wird.

Gemäß einer Weiterbildung der Erfindung sind an der Auflage zwei Paare von Zapfen mit horizontalen Achsen vorgesehen, welche die beiden Kippachsen bilden und wechselweise in den beiden Kippachsen zugeordnete, nach oben offene Gabeln des Gestelles eingreifen. Dadurch ergibt sich der Übergang des Kippvorganges von Kippachse zu Kippachse automatisch dann, wenn der Behälter mit allen vier Zapfen in den Gabeln liegt, welche die Schwenklager für die Zapfen bilden.

Beim Weiterwirken des Kippantriebes werden die zuvor wirksamen Zapfen aus ihren Gabeln ausgehoben, so daß ab dann bis zur Erreichung der Entleerstellung nur mehr die zuvor nicht wirksamen Zapfen mit ihren Gabeln die Schwenklagerung bilden. Diese Konstruktion ermöglicht es auch, die Auflage vom restlichen Gestell nach Lösung des Kippantriebes abzuheben und später wieder aufzusetzen, z. B. zwecks Wartung oder Reparatur. Eine Lösung des Kippantriebes bei dieser Abhebung der Auflage kann sogar entfallen, wenn gemäß einer Weiterbildung der Erfindung die Kolbenstange eines am Gestell angelenkten Druckmittelzylinders gelenkig an der Auflage befestigt ist, und zwar an einer Stelle, die in der Einfahrstellung für den Behälter unterhalb derjenigen Achse liegt, um welche die Kippung der Auflage in deren zur Rotation des Behälters dienenden Stellung erfolgt, wobei die Anlenkstelle des Druckmittelzylinders am Gestell tiefer liegt als diejenige Achse, um welche die Kippung des Behälters in seine Entleerstellung erfolgt. Die erwähnte Anlenkung der Kolbenstange bzw. des Druckmittelzylinders an der Auflage bzw. am Gestell kann der Abhebung der Auflage vom Gestell bis zur maximalen Ausziehmöglichkeit der Kolbenstange aus dem Zylinder folgen, so daß für eine begrenzte Abhebung der Auflage vom Gestell der Antrieb nicht gelöst werden muß. Die beschriebene Art der Anlenkstellen hat sich darüberhinaus für die problemlose Schwenkung bzw. Kippung der Auflage aus der Einfahrstellung des Behälters bis in seine Entleerstellung am besten bewährt.

Zur Versteifung der Konstruktion ist es vorteilhaft, wenn die beiden Zapfenpaare an einer gemeinsamen Grundplatte der Auflage angeordnet sind, die auch für die Lagerung der Tragrollen herangezogen werden kann. Eine Weiterbildung der Erfindung besteht hiebei darin, daß die Auflage mit einer über die Füllöffnung des Behälters hinausragenden Verlängerung eine Rutsche für das aus dem Behälter entleerte Gut bildet, wobei vorzugsweise seitliche Wangen der Auflage, die die Tragrollen abschirmen, zu seitlichen Flügeln der Rutsche verlängert sind. Diese Rutsche erleichtert die Überführung des Massiergutes aus dem Behälter in einen anderen Behälter, z. B. einen Transportwagen od. dgl., wobei die seitlichen Flügel der Rutsche verhindern, daß Fleischstücke von den Seitenrändern der Rutsche abgleiten.

Es sollte auch dafür gesorgt sein, daß bei der Durchführung des Kippvorganges oder auch während des Massiervorganges der Behälter nicht von der Auflage abrutschen kann. Vorzugsweise ist bei der erfindungsgemäßen Konstruktion diese Sicherung erfindungsgemäß dadurch gebildet, daß der Behälter an seinem Umfang mit einem umlaufenden Flansch versehen ist, der in der Entleerstellung des Behälters an einem gegen die Behälterachse zu vorstehenden Anschlag der Auflage anliegt. Vorzugsweise ist dieser Anschlag von einem Kragen des in der Entleerstellung unten liegenden Endes der Auflage gebildet. Die Entfernung, mit welcher dieser Kragen von der Bodenplatte der Auflage angeordnet ist, muß selbstverständlich auf die Höhe des Behälters abgestimmt sein.

Um die Schwenkzapfen während des unter Umständen längere Zeit in Anspruch nehmenden Massiervorganges zu entlasten, kann erfindungsgemäß am Gestell eine zusätzliche Abstützung für die Auflage in deren der Rotation des Behälters zugeordneten Stellung vorgesehen sein.

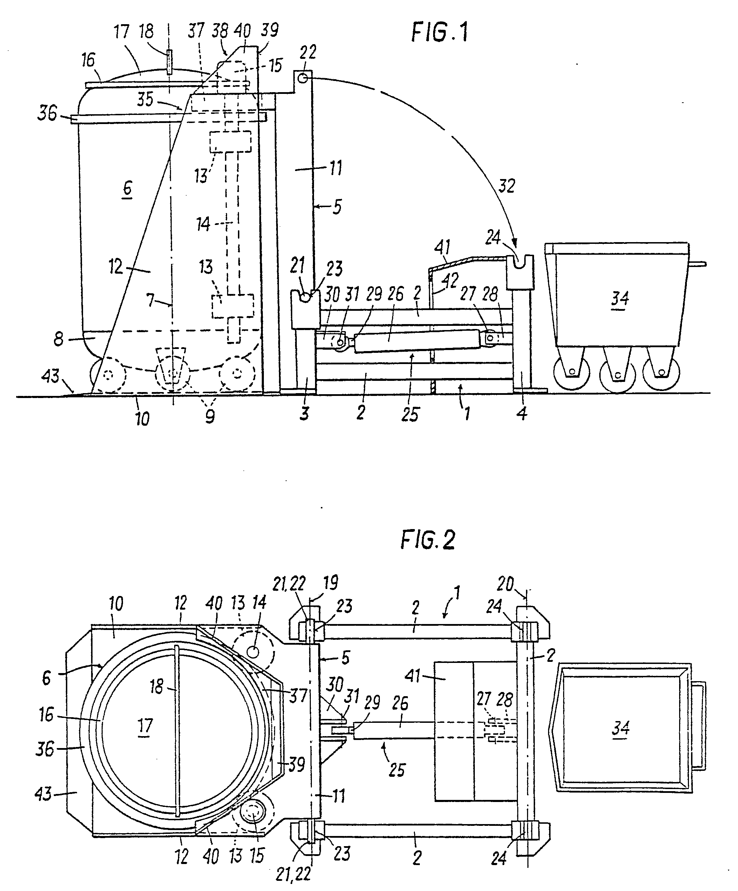

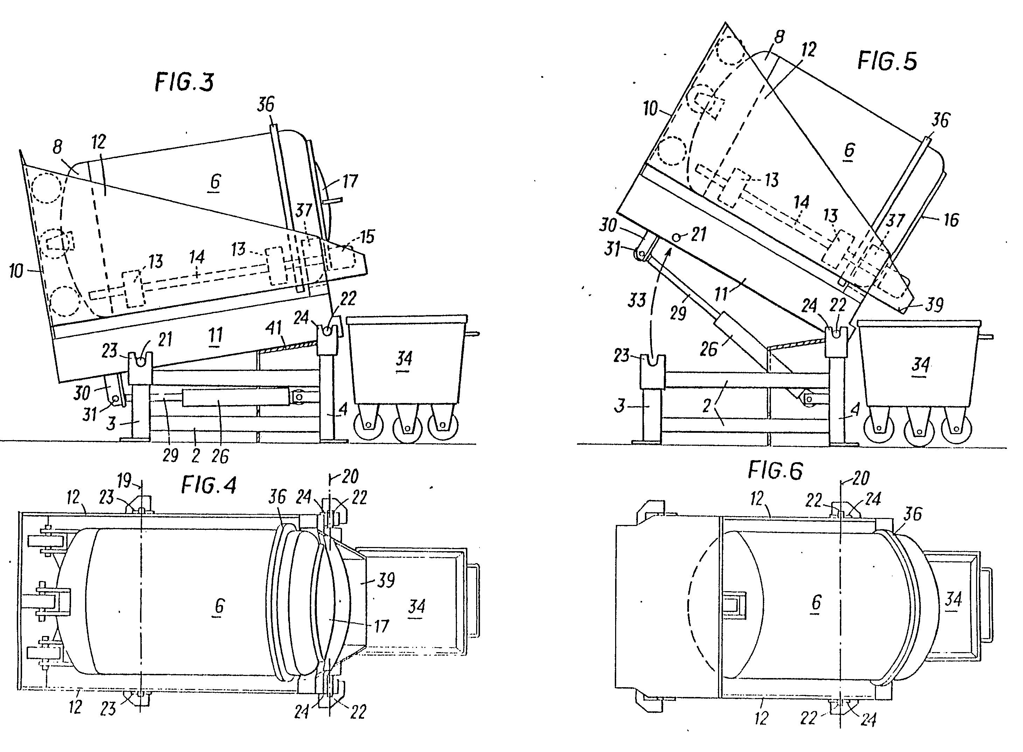

In der Zeichnung ist der Erfindungsgegenstand an Hand eines Ausführungsbeispieles schematisch dargestellt. Fig. 1 zeigt eine Seitenansicht der Anlage in der Einfahrstellung des Behälters. Fig. 2 ist eine Draufsicht zu Fig. 1. Fig. 3 zeigt die Anlage in der Stellung, in welcher die Rotation des Behälters zwecks Massierung des in ihm befindlichen Fleisches erfolgt. Fig. 4 ist eine Draufsicht zu Fig. 3. Fig. 5 zeigt die Anlage in der Entleerstellung des Behälters. Fig. 6 ist eine Draufsicht zu Fig. 5.

Die Anlage besteht aus einem ortsfesten Gestell 1, das vier durch Querbalken 2 untereinander verbundene Steher 3, 4 hat, die zur kippbaren Abstützung einer Auflage 5 für den Behälter 6 für das zu massierende Fleisch dienen. Der Behälter 6 ist an seinem Umfang rotationssymmetrisch bezüglich seiner Achse 7 ausgebildet und vorzugsweise mit einem zylindrischen Mantel versehen. Der Behälter 6 hat unten einen Boden 8, der mit einem von mehreren Rollen gebildeten Fahrgestell 9 versehen ist. Mittels dieses Fahrgestelles 9 kann der Behälter 6 auf eine Bodenplatte 10 der Auflage 5 aufgefahren werden. Diese Bodenplatte 10 ist ebenso wie zwei seitliche Wangen 12 an einer Rückenplatte 11 der Auflage 5 starr befestigt. Die Bauteile 10, 11 und 12 bilden zusammen eine wannenartige Auflage 5 für den Behälter 6 während dessen Kippung, so daß der Behälter 6 sicher gehalten ist. In diese Auflage 5 ist der Behälter 6 bis zur Anlage seines Mantels an Tragrollen 13 einschiebbar, von welchen je zwei und zwei auf zwei gemeinsamen Wellen 14 sitzen, die in der in Fig. 1 dargestellten Lage des Behälters 6 zu beiden Seiten desselben im Bereich der Wangen 12 liegen. Von diesen Wellen 14 ist zumindest die eine, vorzugsweise aber beide, von einem Motor 15 über ein Kettengetriebe angetrieben. Der Motor 15 ist zusammen mit der Auflage 5 verschwenkbar.

Der Behälter 6 ist oben mit einer Füllöffnung 16 versehen, die durch einen Deckel 17 dicht verschließbar ist. Im Deckel 17 können Anschlüsse für eine Vakuumleitung vorgesehen sein, um den Behälter 6 bzw. das darin befindliche Fleisch während bestimmter Behandlungsvorgänge unter Unterdruck zu halten. Ferner ist am Deckel 17 ein Griff 18 zwecks Erleichterung der Handhabung des Deckels 17 befestigt.

Die Auflage 5 ist zusammen mit dem Behälter 6 um eine horizontale Achse 19 aus der in Fig. 1 dargestellten Einfahrstellung des Behälters 6 in die in Fig. 3 dargestellte Massierstellung desselben verschwenkbar und um eine weitere, zur Achse 19 parallele Achse 20 aus der Massierstellung in die in Fig. 5 dargestellte Entleerstellung des Behälters 6 verschwenkbar. Die Kippachsen 19, 20 sind von zwei Zapfenpaaren 21 bzw. 22 gebildet. Die beiden Zapfen jedes dieser Zapfenpaare sind gleichachsig an der Rückenplatte 11 der Auflage 5 befestigt und liegen während des Kippvorganges wechselweise in nach oben offenen Gabeln 23 bzw. 24, die an den oberen Enden der Steher 3 bzw. 4 befestigt sind. Als Kippantrieb 25 dient ein Druckmittelzylinder 26, der bei 27 an einer Konsole 28 des Gestelles 1 angelenkt ist und dessen Kolbenstange 29 an einer Konsole 30 der Rückenplatte 11 bei 31 angelenkt ist. Die Anlenkstelle 31 liegt tiefer als die Achse 19 und die Anlenkstelle 27 liegt tiefer als die Achse 20. Wird der Druckmittelzylinder 26 unter Druck gesetzt, so erfolgt zunächst nach Einfahren des Behälters 6 in die Auflage 5 eine Kippung derselben um die Achse 19, bis die Zapfen 22, die in Richtung des Pfeiles 32 (Fig. 1) schwenken, in die Gabeln 24 eingegriffen haben. Diese zweckmäßig durch Endschalter überwachte Lage der Auflage 5 bzw. des von ihr getragenen Behälters 6 entspricht der Massierstellung (Fig. 3), in welcher die Rotation des Behälters 6 um seine Achse 7 durch den Motor 15 über die Tragrollen 13 erfolgt, die zwecks besserer Mitnahme des Behälters 6 mit einem reibungserhöhenden Belag, z. B. aus Gummi, versehen sein können, welcher auch das Geräusch dämpft.

Um den Behälter in die in Fig. 5 dargestellte Entleerstellung zu bringen, wird der Kippantrieb weiter betätigt, so daß die Kolbenstange 29 weiter aus dem Druckmittelzylinder 26 ausgefahren wird (Fig. 3, 5). Hiedurch wird die von den Zapfen 22 gebildete Kippachse 20 wirksam, wogegen die Zapfen 21 aus den Gabeln 23 ausgehoben werden und um die Achse 20 in Richtung des Pfeiles 33 (Fig. 5) nach oben geschwenkt werden. Dadurch gelangt der Behälter 6 in eine Entleerstellung, in welcher seine Füllöffnung 16 unten liegt. Nach Abnahme des Deckels 17 kann nun das im Behälter 6 befindliche Gut entleert werden, z. B. in einen Transportwagen 34.

Um die Abnahme des Deckels 17 zu erleichtern und zu vermeiden, daß das aus dem Behälter 6 nachdrückende Füllgut die Deckelabnahme beeinträchtigt, empfiehlt es sich, vor der Weiterkippung aus der Massierstellung (Fig. 3) in die Entleerstellung (Fig. 5) zunächst in die Einfahrstellung (Fig. 1) zurückzukippen und in dieser Stellung der Anlage den Deckel 17 abzunehmen. Dann kann in einem Zug in die Entleerstellung (Fig. 5) gekippt werden.

Um zu vermeiden, daß in der Entleerstellung (Fig. 5) der Behälter 6 von der Auflage 5 abrutscht, ist eine Sicherung 35 vorhanden, die ein solches Abrutschen verhindert. Diese Sicherung besteht aus einem den Umfang des Behälters 6 umgebenden Flansch 36, welcher in der Entleerstellung des Behälters 6 an einem gegen die Behälterachse 7 zu vorstehenden Anschlag 37 der Auflage 5 anliegt. Dieser Anschlag 37 ist von einem Kragen des in der Entleerstellung unten liegenden Endes der Auflage gebildet.

Um zu vermeiden, daß bei der Entleerung des Behälters 6 (Fig. 5) Füllgut danebengeschüttet wird, bildet die Auflage 5 mit einer über die Füllöffnung 16 des Behälters 6 hinausragenden Verlängerung 38 eine Rutsche 39 für das aus dem Behälter 6 austretende Gut, wobei zweckmäßig die seitlichen Wangen 12 der Auflage 5, welche die Tragrollen 13 abschirmen, zu seitlichen Flügeln 40 der Rutsche 39 verlängert sind.

Im Gestell 1 kann eine zusätzliche Abstützung 41 für die Auflage in deren Massierstellung (Fig. 3) vorgesehen sein, um die Zapfen 21, 22 während des Massiervorganges zu entlasten. Diese Abstützung 41 muß selbstverständlich eine Öffnung 42 haben, die die Schwenkbewegung des Druckmittelzylinders 26 erlaubt. Die Abstützung 41 kann zur Unterbringung von Anlageteilen, z. B. der hydraulischen Anlage, ausgenützt sein.

Die Bodenplatte 10 kann an ihrer Vorderkante mit einer das Aufschieben des Wagens 6 erleichternden Abschrägung 43 versehen sein.

Die beschriebenen Kipp- und Rotationsvorgänge lassen sich mittels Endschaltern leicht automatisch steuern.

## Patentansprüche

1. Anlage zum Massieren von Fleisch, mit einem Gestell (1) mit einer Auflage (5) für einen vom Gestell (1) trennbaren Behälter (6) für das zu massierende Fleisch, in die der an seinem einen Stirnende mit einem Boden (8) mit einem Fahrgestell (9) und an seinem anderen Stirnende mit einer Füllöffnung (16) versehene rotationssymmetrische Behälter (6) in stehender Lage einfahrbar und mittels der um eine horizontale, normal zur Behälterachse liegende Kippachse (19) kippbaren Auflage (5) in eine liegende Stellung schwenkbar ist, wobei die Auflage (5) mit Tragrollen (13) für den Behälter (6) versehen ist, von deren Wellen (14) zumindest eine zwecks Rotation des Behälters (6) in seiner liegenden Stellung um seine Achse antreibbar ist, und wobei für die Kippung der Auflage (5) ein Kippantrieb (25) im oder am Gestell (1) vorgesehen ist, dadurch gekennzeichnet, daß der auf den Tragrollen (13) liegende Behälter (6) mittels der Auflage (5) aus der liegenden Stellung um eine weitere, zur genannten Kippachse (19) parallele Kippachse (20) weiter in eine geneigte Entleerstellung kippbar ist, in der die Füllöffnung (16) unten liegt.

2. Anlage nach Anspruch 1, dadurch gekennzeichnet, daß die weitere Kippachse (20) höher liegt als die erstgenannte Kippachse (19).

3. Anlage nach Anspruch 1 oder 2, dadurch gekennzeichnet, daß derselbe Kippantrieb (25) zur Kippung des Behälters (6) um beide Kippachsen (19, 20) dient.

4. Anlage nach Anspruch 3, dadurch gekennzeichnet, daß die Kolbenstange (29) eines am Gestell (1) angelenkten Druckmittelzylinder (26) des Kippantriebes (25) gelenkig an der Auflage (5) befestigt ist, und zwar an einer Stelle (31), die in der Einfahrstellung des Behälters (6) unterhalb derjenigen Achse (19) liegt, um welche die Kippung der Auflage (5) in ihre zur Rotation des Behälters (6) dienende Stellung erfolgt, wobei die Anlenkstelle (27) des Druckmittelzylinders (26) am Gestell (1) tiefer liegt als diejenige Achse (20), um welche die Kippung des Behälters (6) in seine Entleerstellung erfolgt.

5. Anlage nach einem der Ansprüche 1 bis 4, dadurch gekennzeichnet, daß an der Auflage (5) zwei Paare von Zapfen (21, 22) mit horizontalen Achsen vorgesehen sind, welche die beiden Kippachsen (19, 20) bilden und wechselweise in, den beiden Kippachsen (19, 20) zugeordnete, nach oben offene Gabeln (23, 24) des Gestelles (1) eingreifen.

6. Anlage nach Anspruch 5, dadurch gekennzeichnet, daß die beiden Zapfenpaare (19, 20) an einer gemeinsamen Rückenplatte (11) der Auflage (5) angeordnet sind, an der auch die Tragrollen (13) gelagert sind.

7. Anlage nach einem der Ansprüche 1 bis 6, dadurch gekennzeichnet, daß die Auflage (5) mit einer über die Füllöffnung (16) des Behälters (6) hinausragenden Verlängerung eine Rutsche (39) für das aus dem Behälter (6) entleerte Gut bildet.

8. Anlage nach Anspruch 7, dadurch gekennzeichnet, daß seitliche Wangen (12) der Auflage (5), welche die Tragrollen (13) abschirmen, zu seitlichen Flügeln (40) der Rutsche (39) verlängert sind.

9. Anlage nach einem der Ansprüche 1 bis 8, dadurch gekennzeichnet, daß eine Sicherung (35) gegen Abgleiten des Behälters (6) von der Auflage (5) in der Entleerstellung des Behälters (6) vorgesehen ist.

10. Anlage nach Anspruch 9, dadurch gekennzeichnet, daß der Behälter (6) an seinem Mantel mit einem umlaufenden Flansch (36) versehen ist, der in der Entleerstellung des Behälters (6) an einem gegen die Behälterachse (7) zu vorstehenden Anschlag (37) der Auflage (5) anliegt.

11. Anlage nach Anspruch 10, dadurch gekennzeichnet, daß der Anschlag (37) von einem Kragen des in der Entleerstellung unten liegenden Endes der Auflage (5) gebildet ist.

12. Anlage nach einem der Ansprüche 1 bis 11, dadurch gekennzeichnet, daß am Gestell (1) eine zusätzliche Abstützung (41) für die Auflage (5) in deren der Rotation des Behälters (6) zugeordneten Stellung vorgesehen ist.

## Claims

1. An apparatus for massaging meat, having a frame (1) with a support (5) for a container (6) removable from the frame (1) for the meat to be massaged, into which apparatus the axially symmetrical container (6) may be introduced in an upright position, the container being provided at one of its faces with a base (8) having an undercarriage (9) and at its other face with a filling opening (16), and being pivotable into a horizontal position by means of the support (5) tiltable about a horizontal tilting axis (19) at right angles to the container axis, wherein the support (5) is provided with support rollers (13) for the container (6), at least one of the shafts (14) of the support rollers (13) being drivable in order to rotate the container (6) about its axis in its horizontal position, and a tilting drive (25) being provided in or on the frame (1) for tilting the support (5), characterized in that the container (6) disposed on the support rollers (13) may be further tilted by means of the support (5) about a further tilting axis (20) parallel to the said tilting axis (19) from the horizontal position into an inclined emptying position wherein the filling opening (16) is at the bottom.

2. An apparatus according to Claim 1, characterized in that the further tilting axis (20) is higher than the first tilting axis (19).

3. An apparatus according to Claim 1 or 2, characterized in that the same tilting drive (25) is used for tilting the container (6) about both tilting axes (19, 20).

4. An apparatus according to Claim 3, characterized in that the piston rod (29) of a compression medium cylinder (26) of the tilting drive (25), the cylinder being coupled to the frame (1), is secured in an articulated manner on the support (5), namely at a point (31) which, in the insertion position of the container (6), is below the axis (19) about which the support (5) tilts into its position used for the rotation of the container (6), the coupling point (27) of the pressure medium cylinder (26) being lower on the frame (1) than the axis (20) about which the container (6) tilts into its emptying position.

5. An apparatus according to any one of Claims 1 to 4, characterized in that two pairs of pins (21, 22) with horizontal axes are provided on the supports (5), which pins form the two tilting axes (19, 20) and engage alternately in forks (23, 24) of the frame (1), the pins being open at the top and being associated with the two tilting axes (19, 20).

6. An apparatus according to Claim 5, characterized in that the two pairs of pins (21, 22) are disposed on a common back plate (11) of the support (5) on which the support rollers (13) are also mounted.

7. An apparatus according to any one of Claims 1 to 6, characterized in that the support (5) forms a chute (39) for the material emptied out of the container (6) with an extension projecting beyond the filling opening (16) of the container (6).

8. An apparatus according to Claim 7, characterized in that lateral sides (12) of the support (5), which shield the support rollers (13), are extended to form lateral wings (40) of the chute (39).

9. An apparatus according to any one of Claims 1 to 8, characterized in that a safety device (35) is provided for preventing the container (6) from sliding off the support (5) in the emptying position of the container (6).

10. An apparatus according to Claim 9, characterized in that the container (6) is provided on its cover with a continuous flange (36) which in the emptying position of the container (6) bears against a stop (37) of the support (5) projecting towards the container axis (7).

11. An apparatus according to Claim 10, characterized in that the stop (37) is formed by a collar on the end of the support (5) situated at the bottom in the emptying position.

12. An apparatus according to any one of Claims 1 to 11, characterized in that an additional support (41) is provided on the frame (1) for the support (5) in the position thereof associated with the rotation of the container (6).

## Revendications

1. Installation pour attendrir la viande, comportant un châssis (1) avec un support (5) pour un récipient (6) séparable du châssis (1) pour la viande à attendrir, dans laquelle le récipient (6) à symétrie de rotation et pourvu à l'une de ses extrémités frontales d'un fond (8) avec un châssis de roulement (9) et à son autre extrémité frontale d'un orifice de remplissage (16) peut être introduit en position droite et peut basculer en position couchée au moyen du support (5) pouvant basculer sur un axe de basculement horizontal (19) perpendiculaire à l'axe du récipient, tandis que le support (5) est pourvu de galets (13) pour le récipient (6) dont un au moins des arbres (14) peut être entraîné afin d'assurer la rotation du récipient (6) en position couchée et où il est prévu une transmission de basculement (25) dans ou sur le châssis (1) pour assurer le basculement du support (5), caractérisée en ce que le récipient (6) reposant sur les galets (13) peut basculer au moyen du support (5) depuis la position horizontale jusqu'à une autre position de vidage inclinée, en tournant autour de l'axe de basculement (20) parallèle à l'axe de basculement précité (19), l'orifice de remplissage (16) étant alors en position inférieure.

2. Installation selon la revendication 1, caractérisée en ce que l'autre axe de basculement (20) est situé au-dessus du premier axe de basculement (19) .

3. Installation selon la revendication 1 ou 2, caractérisée en ce que la même transmission de basculement (25) est utilisée pour basculer le récipient (6) sur les deux axes de basculement (19, 20).

4. Installation selon la revendication 3, caractérisée en ce que la tige de piston (29) d'un cylindre à pression (26) de la transmission de basculement (25) articulée au châssis (1) est fixée au support (5) avec une articulation à un endroit (31) situé, en position d'introduction du récipient (6), en dessous de l'axe (19) autour duquel s'effectue le basculement du support (5) dans sa position servant à la rotation du récipient (6), tandis que le point d'articulation (27) du cylindre à pression (26) sur le châssis (1) est situé plus bas que l'axe (20) autour duquel s'effectue le basculement du récipient (6) vers sa position de vidage.

5. Installation selon l'une des revendications 1 à 4, caractérisée en ce qu'il est prévu sur le support (5) deux paires de tourillons (21, 22) à axes horizontaux, qui constituent les deux axes de basculement (19, 20) et qui viennent alternativement en contact avec des fourches (23, 24) du châssis (1) ouvertes vers le haut et correspondant aux deux axes de basculement (19, 20).

6. Installation selon la revendication 5, caractérisée en ce que les deux paires de tourillons (19, 20) sont disposées sur une plaque postérieure commune (11) du support (5), sur laquelle sont également fixés les galets (13).

7. Installation selon l'une des revendications 1 à 6, caractérisée en ce que le support (5) constitue, avec un prolongement dépassant l'orifice de remplissage (16) du récipient (6) une glissière (39) pour le produit évacué du récipient (6).

8. Installation selon la revendication 7, caractérisée en ce que des flasques latérales (12) du support (5) qui protègent les galets (13) sont prolongées pour former des ailes latérales (40) de la glissière (39).

9. Installation selon l'une des revendications 1 à 8, caractérisée en ce qu'il est prévu une sécurité (35) empêchant que le récipient (6) ne glisse du support (5) en position de vidage du récipient (6).

10. Installation selon la revendication 9, caractérisée en ce que le récipient (6) est pourvu, sur son enveloppe, d'une bride continue (36) qui prend appui, en position de vidage du récipient (6), sur une butée (37) du support (5) opposée à l'axe du récipient (7).

11. Installation selon la revendication 10, caractérisée en ce que la butée (37) est constituée par un collet de l'extrémité du support (5) situé dans le bas, en position de vidage.

12. Installation selon l'une des revendications 1 à 11, caractérisée en ce qu'il est prévu sur le châssis (11) un appui supplémentaire (41) pour le support (5) en position de celui-ci correspondant à la rotation du récipient (6).

FIG.1

FIG.2

FIG.5

FIG.3

FIG.6

FIG.4